# FASCICULE DE BREVET EUROPEEN

(11) **EP 0 586 637 B1**
(45) Date de publication et mention de la délivrance du brevet: **04.04.2001**
(21) Numéro de dépôt: 93904121.6
(22) Date de dépôt: 15.01.1993
(51) Int. Cl.: H01G 2/08

(54) **SYSTEME D'ASSEMBLAGE DE CONDENSATEURS REFROIDIS PAR CONDUCTION**
MONTAGESYSTEM FÜR LEITUNGSGEKÜHLTE KONDENSATOREN
SYSTEM FOR ASSEMBLING CAPACITORS COOLED BY CONDUCTION

(30) Priorité: 26.02.1992 FR 9202329
(43) Date de publication de la demande: 16.03.1994
(73) Titulaire: Jakoubovitch, Albert, F-34320 Roujan (FR)
(72) Inventeur: Jakoubovitch, Albert, F-34320 Roujan (FR)
(86) Numéro de dépôt international: FR9300077
(87) Numéro de publication internationale: WO9317439

(56) Documents cités:
- WO-A-91/07075
- WO-A-92/13355
- FR-A- 2 341 188

## Description

La présente invention concerne un moyen de constituer des condensateurs de puissance refroidis par conduction, destinés à fonctionner à des tensions comprises entre 100 et 2000 V et capable de fournir des puissances de l'ordre de quelques dizaines à quelques centaines de KVAR, à des fréquences de quelques dizaines à quelques centaines de kilohertz.

Le brevet N°7703948 décrit un condensateur destiné à être refroidit par l'intermédiaire de radiateurs mais qui est nécessairement limité en puissance par le mode de refroidissement choisi.

Le contact thermique avec les électrodes de connection n'est en outre assuré que par un simple contact qui ne permet pas de véhiculer des courants importants.

Enfin la configuration des électrodes amène nécessairement une inductance parasite élevée.

Le brevet français N° 9100 718 décrit, de la page 2 ligne 20 à la page 3 ligne 9, un moyen d'assembler des éléments de condensateurs en batteries caractérisé par l'utilisation d'alvéoles pratiquées dans des blocs métalliques situés à faible distance l'un de l'autre dans lesquelles sont logées des éléments de condensateurs.

Cette disposition permet d'éviter un champs magnétique sur les dits éléments ainsi que d'offrir une inductance parasite minimum pour la batterie ainsi constituée.

Le brevet N° 9100 718 prévoyait le refroidissement d'une telle batterie par circulation d'un liquide réfrigérant dans lesdits blocs.

Il est possible, lorsqu'on utilise un faible nombre d'éléments de condensateurs, de refroidir la batterie par conduction thermique.

C'est l'objet de la présente invention.

Une autre caractéristique des appareils réalisés selon la présente invention consiste en ce qu'il est possible de refroidir les condensateurs réalisés selon ce dispositif, soit sur chant, soit sur les faces latérales.

L'invention sera décrite en se référant aux exemples représentés sur les dessins en annexe.

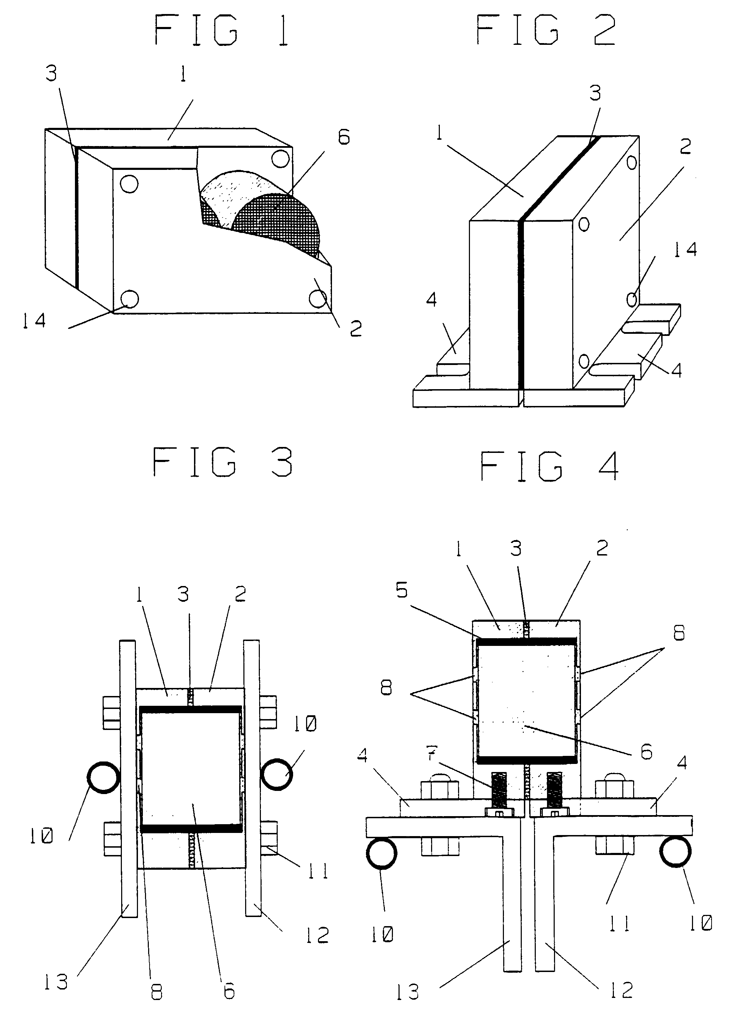

La figure 1 représente un condensateur selon l'invention il est constitué de 2 plaques massives (1) et (2) réalisées en métal conducteur de la chaleur et de l'électricité

Ces 2 électrodes (1) et (2) sont percées d'alvéoles destinées au logement de l'élément ou des éléments condensateurs (6).

Chacune des électrodes(1) et (2) est séparée par un intervalle isolant(3) de faible épaisseur, de l'ordre de 1 à 3 mm, et percées de 4 trous taraudés (14) destinés à la fixation de ce condensateur.

La figure 2 représente le même condensateur équipé de 2 ailettes (4) destinées à permettre la fixation du condensateur sur chant.

La figure 3 représente une coupe du condensateur selon l'invention refroidi sur les 2 faces opposées.

Dans cet exemple d'utilisation, le refroidissement du condensateur est assuré par la fixation de celui-ci sur 2 plaques de cuivre collectrices (12) et (13) refroidies par un liquide réfrigérant circulant à l'intérieur d'un tuyau (10).

Le condensateur est fixé à ces plaques par l'intermédiaire de boulons (11) qui viennent se loger dans les trous taraudés (14) du condensateur.

Selon une des caractéristiques de l'invention, les éléments de condensateurs (6) sont raccordés aux électrodes (1) et (2) par des soudures (8) pratiquées sur le fond des alvéoles permettant de loger les éléments de condensateurs (6).

La paroi au fond de l'alvéole est ramené à une épaisseur de l'ordre du millimètre qui permet de réaliser une telle soudure sans échauffer d'une façon importante l'élément de condensateur (6).

Le condensateur est avantageusement imprégné avec une résine isolante (5) qui permet de solidariser mécaniquement l'élément de condensateur (6) et les électrodes (1) et (2) afin de constituer un ensemble rigide d'une grande solidité.

La figure 4 représente le même condensateur mais équipé d'une paire d'ailettes de refroidissement et de fixation (4).

Ces ailettes sont fixées au corps du condensateur par des boulons (7).

Le refroidissement du condensateur s'effectue alors par contact thermique entre les ailettes (4) et les plaques collectrices de courant (12) et (13) refroidies par la circulation d'un liquide réfrigérant circulant dans les tuyaux de refroidissement (10).

La fixation de ces ailettes (4) sur le collecteur de courant (12) et (13) est effectuée grâce à des boulons (11).

Il est ainsi possible, en partant du même élément, de permettre 2 modes de fixation et de refroidissement du condensateur qui correspondent aux utilisations les plus courantes.

Les condensateurs réalisés selon l'invention présentent ainsi une surface extérieure presque entièrement métallique dont les dimensions sont suffisantes pour assurer un refroidissement efficace par conduction.

L'étendue des surfaces de contact disponibles pour le dit refroidissement permet, par un refroidissement efficace des éléments de condensateur (6) et, par voie de conséquence, une puissance élevée du condensateur, pour un volume faible.

## Revendications

1. Système d'assemblage de condensateurs dans lequel un ou plusieurs éléments de condensateurs (6) sont fixés par soudure dans une ou plusieurs alvéoles pratiquées dans deux plaques métalliques massives (1, 2), caractérisé en ce qu'il est destiné à être refroidi par conduction grâce à une surface extérieure presque entièrement métallique,
les deux plaques métalliques (1, 2) étant isolées entre elles grâce à un intervalle (3) de un ou plusieurs millimètres, avantageusement rempli par une matière isolante (5).

2. Condensateur réalisé selon la revendication 1, caractérisé par le fait que des ailettes sont fixées sur le corps du condensateur 2 de façon à refroidir le condensateur sur chant.

3. Condensateur selon la revendication 1 ou 2 caractérisé en ce que le même condensateur peut être refroidi soit sur deux faces opposées,soit sur chant, grâce à l'addition de deux ailettes (4).

4. Condensateur selon revendication 1, caractérisé en ce que les alvéoles pratiquées sur les électrodes (1, 2) sont telles que leur fond est ramené à une épaisseur de l'ordre du millimètre afin de permettre une soudure de l'élément (6) du condensateur sur les électrodes (1, 2) sans détérioration par surchauffe de l'élément de condensateur.

## Patentansprüche

1. Montagesystem für leitungsgekühlte Kondensatoren darin bestehend, ein oder mehrere Kondensatorelemente (6) in einer oder mehreren Zellen festzuschweißen, welche in zwei massiven Metallplatten (1) und (2)ausgeführt und so zusammengefügt sind, dass sie ein Parallelepipedon-Rechteck bilden, das eine fast hundertprozentig metallische Oberfläche präsentiert.
Die beiden Metallplatten (1) und (2) sind durch einen ein bis mehrere Millimeter großen Intervall (3), der vorteilhafterweise mit einem Isoliermaterial(5)gefüllt ist, voneinander getrennt.

2. Nach Anspruch 1 ausgeführter Kondensator, gekennzeichnet durch die Möglichkeit, auf dem Kondensatorkörper zwei Rippen (4) zu befestigen, welche zum Befestigen und Kühlen des Kondensators auf der Seite (sur champs) dienen.

3. Kondensator nach Anspruch 1, dadurch gekennzeichnet, dass derselbe Kondensator durch Hinzufügen von zwei Rippen (4) entweder auf zwei gegenüberliegenden Stirnseiten oder auf einer Seite (sur un champs) gekühlt werden kann.

4. Kondensator nach Anspruch 1, gekennzeichnet durch die Verwendung von auf die Elektroden (1) und (2) ausgeführten Zellen, deren Boden auf Millimeterdicke reduziert ist, um ein Verschweißen des Kondensatorelementes (6) mit den Elektroden (1) und (2) ohne Beschädigung der Kondensatorelemente durch Überhitzung zu erlauben.

## Claims

1. System to assemble capacitors cooled by conduction which consists of soldering one or more capacitor elements (6) in one or more holes made in two solid metal plates (1) and (2) and assembled so as to form a right parallelepiped whose outer surface is virtually all metal.
The two metal plates (1) and (2) are separated from each other by an interval (3) of one or a few millimetres, filled with an insulating material (5).

2. Capacitor made according to claim 1 and characterised by the possibility of attaching on the capacitor body two fins (4) intended to attach and cool the capacitor on the edge.

3. Capacitor according to claim 1 characterised in that the same capacitor can be cooled either on two opposite sides, or on one edge, by adding two fins (4).

4. Capacitor according to claim 1 characterised by the use of holes made on the electrodes (1) and (2) whose bottoms are reduced to a thickness of about one millimetre so that the element (6) of the capacitor can be soldered to the electrodes (1) and (2) to avoid damaging the capacitor elements by overheating.
